# EUROPEAN PATENT SPECIFICATION

(11) **EP 3 704 714 B1**
(45) Date of publication and mention of the grant of the patent: **04.12.2024**
(21) Application number: 18892438.5
(22) Date of filing: 30.10.2018
(51) Int. Cl.: G21C 3/60, G21C 3/04, G21C 9/033, G21C 3/07, G21C 3/20, G21C 7/04, G21C 21/02

(54) **HIGH TEMPERATURE NUCLEAR FUEL SYSTEM FOR THERMAL NEUTRON REACTORS**
HOCHTEMPERATUR-KERNBRENNSTOFFSYSTEM FÜR THERMISCHE NEUTRONENREAKTOREN
SYSTÈME DE COMBUSTIBLE NUCLÉAIRE À HAUTE TEMPÉRATURE POUR RÉACTEURS THERMIQUES À NEUTRONS

(30) Priority: 31.10.2017 US 201762579340 P
(43) Date of publication of application: 09.09.2020
(73) Proprietor: Westinghouse Electric Company LLC, Cranberry Township, PA 16066 (US)
(72) Inventor: LAHODA, Edward J., Edgewood, Pennsylvania 15218 (US); XU, Peng, Columbia, South Carolina 29229 (US); OELRICH, Robert L., Jr., Columbia, SC 29223 (US); BOYLAN, Frank A., Ellwood City, Pennsylvania 16117 (US); SHAH, Hemant, Columbia, South Carolina 29223 (US); RAY, Sumit, Columbia, South Carolina 29212 (US); FRANCESCHINI, Fausto, Pittsburgh, PA 15217 (US); ROMERO, Javier, Columbia, South Carolina 29229 (US); WRIGHT, Jonathan, 72464 Vasteras (SE)
(74) Representative: Fleuchaus & Gallo Partnerschaft mbB
(86) International application number: PCT/US2018/058158
(87) International publication number: WO 2019/125604

(56) References cited:
- EP-A1- 2 539 900
- EP-A1- 2 539 900
- WO-A1-2015/183396
- JP-A- 2009 092 619
- US-A- 4 717 534
- US-A- 4 717 534
- US-A- 5 319 690
- US-A1- 2014 254 740
- US-A1- 2014 254 740

## Description

### STATEMENT REGARDING GOVERNMENT RIGHTS

This invention was made with government support under Contract No. DE-NE0008222 awarded by the Department of Energy. The U.S. Government has certain rights in this invention.

### BACKGROUND OF THE INVENTION

### 1. Field of the Invention

The invention relates to nuclear fuel, and more specifically to an accident tolerant fuel for use in light and heavy water reactors.

### 2. Description of the Prior Art

Fissile material for use as nuclear fuel includes uranium dioxide (UO₂), plutonium dioxide (PuO₂), uranium nitride (UN) either with natural nitrogen or nitrogen enriched in the ¹⁵N isotope, and/or tri-uranium disilicide (U₃Si₂), typically in pellet form. Fuel rods are encased in a cladding that acts as a containment for the fissile material. The cladding is preferably in the form of an elongate structure, such as a tube, and the fuel rod includes a plurality of pellets stacked in the cladding tube. In a typical fuel rod, the top and bottom ends of the rod are closed with end caps and a spring or other device to bias the fuel pellets together in the stack is positioned within the cladding on one end of the fuel rod. In a reactor, fuel rods are grouped together in an array which is organized to provide a neutron flux in the core sufficient to support a high rate of nuclear fission and the release of a large amount of energy in the form of heat.

UO₂ is currently a widely used nuclear fuel. Although susceptible to water and steam oxidation, U₃Si₂ is the favored fuel material for accident tolerant fuel (ATF) systems. U₃Si₂ has a high density (12.2 gm/cm³), very high thermal conductivity (up to 5x UO₂), and a melting point of 1665 °C. To date, however, its use has been confined to lead test rods in test reactors where it is buried in a thick aluminum cladding which makes water coolant exposure unlikely, and where integral fuel burnable absorbers (IFBA) are not a required component of the fuel.

To be accident tolerant, nuclear fuel components are designed for accidents that can result in fuel temperatures of about 1700 °C assuming the addition of a minimal amount of a coolant in the fuel assembly. Nuclear fuels have been combined with a coated zirconium alloy cladding. Due to the ability of the coated zirconium to expand with the expanding pellet during the useful life of the fissile material, the gap between the pellet and the cladding, which is a major source of thermal heat transfer resistance, can be small, keeping the centerline temperature below the melting point under all transient conditions. The relatively low melting point of U₃Si₂ is therefore not an issue because the very high thermal conductivity of U₃Si₂ precludes fuel centerline melt issues during unexpected power transients.

Under severe conditions such as "beyond design basis" accidents; metal cladding can react exothermally with steam at over 1093 °C. Zirconium cladding metals protecting the nuclear fuel may lose strength during "a loss of coolant" accident, where reactor temperatures can reach as high as 1204 °C, and expand due to internal fission gases within the fuel rod.

The melting point of a mixture of two or more solids (such as an alloy) depends on the relative proportions of the ingredients. A low melting eutectic mixture forms when the solids are at such proportions that the melting point of the mixture is as low as possible. In the case of alloys used in situations where relatively low melting points can create unintended problems, the formation of eutectic mixtures is ideally avoided or the undesirable consequences of a eutectic mixture formation is ideally minimized.

US 4 717 534 teaches a fuel rod including an intermediate cladding layer comprising zirconium alloy mixed with a boron-containing integral fuel burnable absorber.

Suggestions for protecting and strengthening Zr claddings include coating the Zr alloy, but formation of a eutectic mixture can present a problem for coated Zr alloy claddings. While a Zr alloy cladding coated, for example, with Cr initially provides up to 300 °C more temperature tolerance than does a Zr cladding alone, this increased tolerance comes at the expense of reduced cladding strength due to the formation of a liquid eutectic layer formed between the Cr coating and the Zr alloy cladding, thus lowering the melting temperature of the coated cladding, leaving the fuel susceptible to loss of coolant accidents.

If U₃Si₂ is to be used in commercial nuclear power generation, considerations not required for smaller scale test uses must be addressed.

### SUMMARY OF THE INVENTION

The following summary is provided to facilitate an understanding of some of the innovative features unique to the embodiments disclosed and is not intended to be a full description. A full appreciation of the various aspects of the embodiments can be gained by taking the entire specification, claims, and abstract as a whole.

An improved accident tolerant fuel rod for use in light and heavy water reactors is described herein. The fuel rod includes in various aspects, a nuclear fuel selected from the group consisting of U₃Si₂ and UN, in pellet form, a boron-containing integral fuel burnable absorber intermixed with the nuclear fuel in the pellet, and a zirconium-containing cladding material for housing the integral fuel burnable absorber intermixed with the nuclear fuel in the pellet, the cladding material having a coating applied thereto.

The coating may be selected from the group consisting of Cr or a Cr alloy. The Cr alloy may be FeCrAl and FeCrAlY.

In certain aspects of the fuel rod, an interlayer is disposed between the cladding material and the coating. The interlayer may have a thickness of 1 to 20 microns. The interlayer may be selected from the group consisting of a Mo, Ta, W, and Nb.

The interlayer may be applied to the exterior surface of the cladding material by a hot spray process, such as a plasma arc process, or by a cold spray process.

In various aspects, the coating may have a thickness of 5 to 50 microns, and may be applied to the cladding material, or to the interlayer in those embodiments where an interlayer is included, by a cold spray process.

The integral fuel burnable absorber may be selected from the group consisting of UB₂ and ZrB₂, and is intermixed with the nuclear fuel in the pellet. The burnable absorber content intermixed in the fuel pellet may be between 100 ppm and 10000 ppm.

That is, most of the absorber may be in a phase other than UB₂.

### BRIEF DESCRIPTION OF THE DRAWINGS

The characteristics and advantages of the present disclosure may be better understood by reference to the accompanying figures.
FIG. 1A is a side section view of an exemplary fuel rod showing a stack of coated fuel pellets housed in a coated cladding.
FIG. 1B is a cross-section of the fuel rod and fuel pellet through the line 1B-1B of FIG. 1A.
FIG. 2A is a side section view of an exemplary fuel rod showing an uncoated stack of fuel pellets housed in a cladding having an interlayer disposed between the cladding and the coating.
FIG. 2B is a cross-section of the fuel rod and fuel pellet through the line 2B-2B of FIG. 2A.
FIG. 3 is a phase diagram showing the eutectic temperature range for relative atomic % concentrations of Niobium (Nb) and Zirconium (Zr) combinations. The phase diagram plots relative concentrations of Nb and Zr along the horizontal axis, and temperature along the vertical axis. The eutectic point is the point at which the liquid phase (L) borders directly on the solid phase (composed of both Nb and Zr), representing the minimum melting temperature of any possible alloy of Nb and Zr.
FIG. 4 is a phase diagram showing the eutectic temperature range for relative atomic % concentrations of Niobium (Nb) and Chromium (Cr) combinations.

### DESCRIPTION OF THE PREFERRED EMBODIMENTS

As used herein, the singular form of "a", "an", and "the" include the plural references unless the context clearly dictates otherwise. Thus, the articles "a" and "an" are used herein to refer to one or to more than one (i.e., to at least one) of the grammatical object of the article. By way of example, "an element" means one element or more than one element.

Directional phrases used herein, such as, for example and without limitation, top, bottom, left, right, lower, upper, front, back, and variations thereof, shall relate to the orientation of the elements shown in the accompanying drawing and are not limiting upon the claims unless otherwise expressly stated.

In the present application, including the claims, other than where otherwise indicated, all numbers expressing quantities, values or characteristics are to be understood as being modified in all instances by the term "about." Thus, numbers may be read as if preceded by the word "about" even though the term "about" may not expressly appear with the number. Accordingly, unless indicated to the contrary, any numerical parameters set forth in the following description may vary depending on the desired properties one seeks to obtain in the compositions and methods according to the present disclosure. At the very least, and not as an attempt to limit the application of the doctrine of equivalents to the scope of the claims, each numerical parameter described in the present description should at least be construed in light of the number of reported significant digits and by applying ordinary rounding techniques.

Further, any numerical range recited herein is intended to include all sub-ranges subsumed therein. For example, a range of "1 to 10" is intended to include any and all sub-ranges between (and including) the recited minimum value of 1 and the recited maximum value of 10, that is, having a minimum value equal to or greater than 1 and a maximum value of equal to or less than 10.

The improved fuel is suitable for use in light water reactors and heavy water reactors. Light water reactors (LWR) are reactors that use ordinary water as the coolant, including boiling water reactors (BWRs) and pressurized water reactors (PWRs), the most common types used in the United States. A heavy water reactor (HWR) uses heavy water, i.e., deuterium oxide (D₂O) as its coolant and/or moderator. The heavy water coolant is kept under pressure, allowing it to be heated to higher temperatures without boiling, much as in a pressurized water reactor.

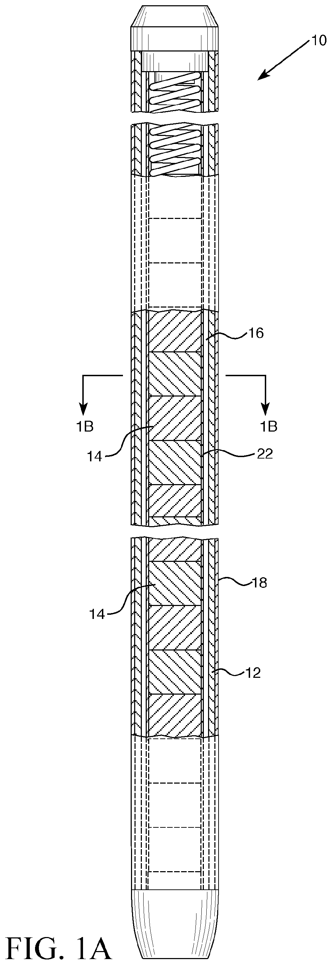

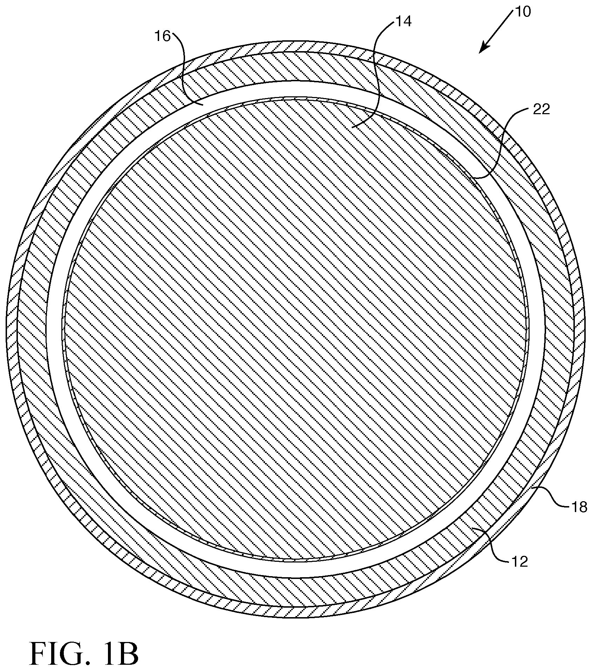

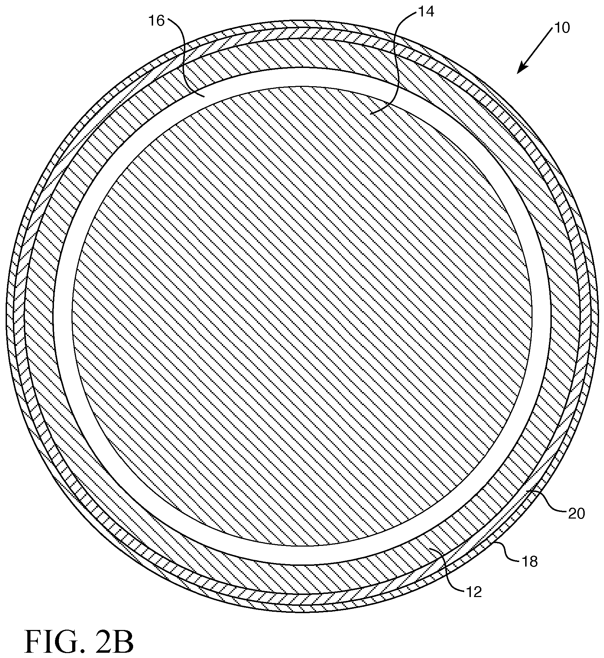

Referring to the accompanying Figures, an improved accident tolerant fuel rod 10 combines the strengths of each of the coated zirconium cladding 12, U₃Si₂ or UN fuel pellets 14, and a boron-containing material, such as UB₂ or a ZrB₂ as an integral fuel burnable absorber. A gap 16 separates the interior of the cladding 12 from the fuel pellets 14. Cladding 12 may, in various aspects, comprise zirconium or a zirconium alloy. The integral fuel burnable absorber may form a coating 22 on the fuel pellet 14 as shown in Fig. 1B, or may be intermixed with the fissile material in the pellet 14, as shown in Fig. 2B.

U₃Si₂ is particularly useful for use with coated zirconium alloy cladding because the initial pellet to fuel gap 16 can be small, due the ability of the coated zirconium cladding 12 to expand as the pellet 14 grows as the fuel burn-up increases during life, and the fact that the coated cladding 12 will creep down onto the fuel during the initial fuel use period. In the several reactions in the process for making U₃Si₂, constituents other than U₃Si₂ may form.

The U₃Si₂ fuel in various aspects has a density between 80% and 99% of theoretical density. U₃Si₂ has a density of 12.2 gm/cm³. The U₃Si₂ fuel pellet may have a density between 9.76 gm/cm³ and 12.08 gm/cm³.

An alternative fuel may be UN, wherein the nitrogen content may be one or a combination of natural nitrogen and nitrogen enriched in the isotope of ¹⁵N. The UN fuel has a density between 80% and 99% of theoretical density. UN has an even higher density than U₃Si₂. The finished pellet 14 may include U and N containing constituents other than UN between 0% and 100%.

In various aspects, the zirconium alloy of cladding 12 may be coated ZIRLO^{™}, made in accordance with the procedures disclosed in U.S. Patent No. 4,649,023. ZIRLO^{™} is an alloy comprising, by weight percent, 0.5-2.0 niobium, 0.7-1.5 tin, 0.07-0.14 iron, and 0.03-0.14 of at least one of nickel and chromium, and at least 0.12 total of iron, nickel and chromium, and up to 220 ppm C, and the balance essentially zirconium. Preferably, the alloy contains 0.03-0.08 chromium, and 0.03-0.08 nickel. Those skilled in the art will appreciate that other zirconium alloys may be acceptable for use in a desired application. In certain aspects, the Zr alloy cladding may be made of AXIOM^{™}, a Zr based alloy generally comprised of 0.2 to 1.5 weight percent niobium, 0.01 to 0.6 weight percent iron, 0.0 to 0.8 weight percent tin, 0.0 to 0.5 weight percent chromium, 0.0 to 0.3 weight percent copper, 0.0 to 0.3 weight percent vanadium, 0.0 to 0.1 weight percent nickel, and a balance at least 97 weight percent zirconium, including impurities. In certain aspects, the Zr alloy may comprise 0.4 to 1.5 weight percent niobium, 0.4 to 0.8 weight percent tin, 0.05 to 0.3 weight percent iron, 0.0 to 0.5 weight percent chromium, and the balance at least 97 weight percent zirconium including impurities. See for example, U.S. Patents Nos. 9,284,629 and 9,725,791.

The integral fuel burnable absorber may be UB₂ or ZrB₂. UB₂ has a high density (12.7 gm/cm³) and high melting point (2430 °C) but cannot be used for a fuel due to its water reactivity. Boron naturally occurs as stable isotopes B10 and B11, with B11 making up about 80% and B10 making up about 20% of natural boron. The B10 isotope cannot be used in a fuel in large amounts because the B10 isotope has a very large neutron cross-section that would make it impossible to start a reactor if there were a large quantity of UB₂ in the core. Therefore, if UB₂ were to be used as a fuel, most of the B10 would have to be removed so that only about 100 to 1000 parts per million (ppm) remained. This would increase the cost of the fuel and make it uneconomical in relation to UO₂ or U₃Si₂. Boron, when used as an integral fuel burnable absorber, may be sprayed in very small quantities on the outside of fuel pellets in the form of UB₂ or ZrB₂ to form coating 22. ZrB₂, like UB₂, is known to interact with the oxygen (for example, in UO₂ in those instances when UO₂ is used as the fissile material) to form BOx (where x is a number indicative of a different phase) during the sintering process, driving off the boron contained within the pellet 14. In the process for making UB₂, other constituents may be formed. When the integral burnable absorber is UB₂, there may be UBx components where x is a whole number or fraction thereof such as UB_{1.5}, UB₄, UB₆ or UB₁₂, or some other phase.

In the fuel system described herein, the boron-containing components may be added to the fissile material powder forming the fuel pellet 14, thereby providing a tremendous cost saving compared to spraying boron-compounds as a very thin, uniform coating on the outer surface of all of the pellets. The boron-containing integral burnable absorber described herein does not interact with U₃Si₂ when U₃Si₂ is used as the fissile material. Therefore, it can be added directly to the U₃Si₂ powder before pelleting and can be sintered at a very large cost savings and an increase in quality due to the uniformity achieved by this approach compared to the spray methods heretofore used. Since more UB₂ and ZrB₂ can be added to the pellet, enrichment of the B10 isotope content that had been necessary in order to minimize the thickness of the coating is not required, resulting in a further significant cost saving. The boron-containing integral burnable absorber used in the fuel system described herein may have a B10 isotope content at 1% to 90% of the boron. Since UB₂ also has a very high density, the higher addition rates does not significantly affect the total uranium density of the U₃Si₂ pellet.

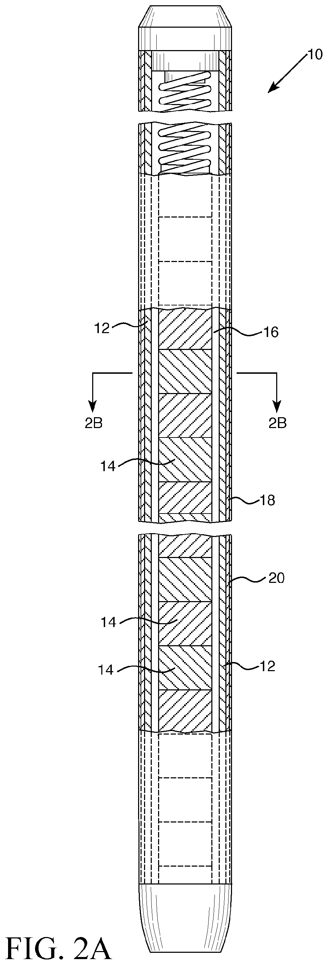

Referring to Figs. 2A and 2B, the fuel rod 10 utilizes zirconium alloy cladding 12 with a coating 18, but more preferably a coating 18 with an interlayer 20. The interlayer may have a thickness of 1 to 20 microns. The coating may be selected from the group consisting of Cr and Cr alloys. The Cr alloy may, for example, be FeCrAl or FeCrAlY.

The interlayer may be selected from the group consisting of a Mo, Ta, W, and Nb. When the interlayer is Nb, for example, it provides very low leakage failures and resistance to very high temperatures (~1700 °C) during beyond design basis accidents. The hard Cr or Cr alloy outer layer 18 provides a very low leakage failure rate which allows the use of the water sensitive U₃Si₂ and UB₂ or ZrB₂. U₃Si₂ provides the high density for excellent economics of operation and the high thermal conductivity and reasonable melting temperature required for good reactor operability.

In various aspects, the pellet 14 with or without coating 22 may be combined with the cladding 12 having both interlayer 20 and outer layer 18. In various aspects, the pellet 14 with or without coating 22 may be combined with the cladding 12 having the coating layer 18, without interlayer 20.

In certain embodiments, the coated zirconium alloy cladded U₃Si₂ fuel having a boron-containing integral fuel burnable absorber described herein takes advantage of the strong points of each of the components. The U₃Si₂ fuel has a low operating temperature, high thermal conductivity, and high density. The Zr coated cladding 12 has a high decomposition temperature, which protects the U₃Si₂ fuel. The melting point and boron content of the UB₂ or ZrB₂ boron-containing integral burnable absorber produces a fuel which optimizes performance during normal operation as well as providing a high level of accident tolerance compared to the current UO₂ fueled/Zr clad nuclear fuel component combination.

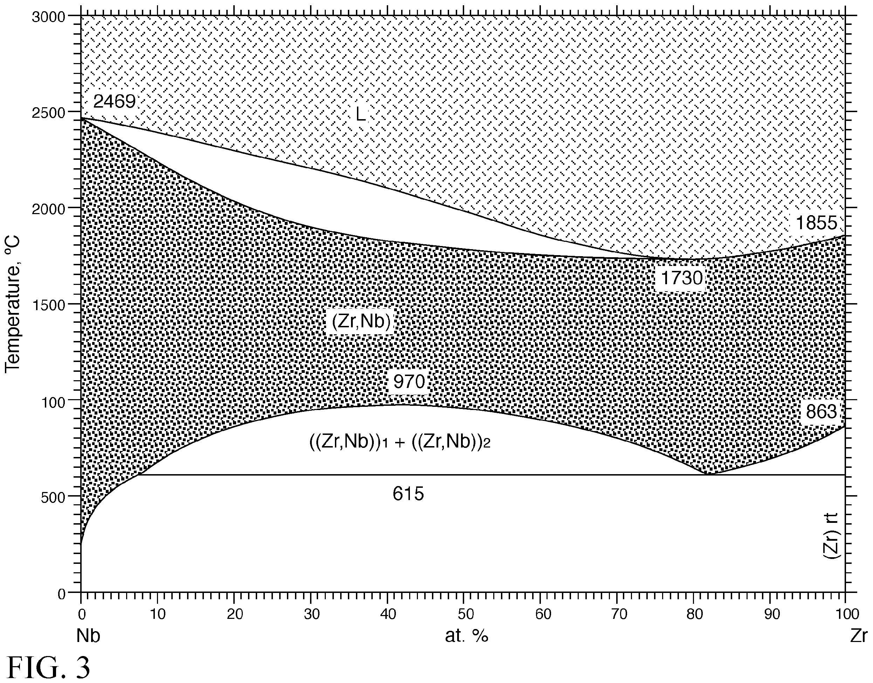

This combination of features in the improved fuel rod 10 described herein utilizes the best features of U₃Si₂, coated Zr and UB₂ or ZrB₂ to overcome the inherent weaknesses of each. For example, it is not feasible to use U₃Si₂ fuels and UB₂ integral fuel burnable absorbers in current metal claddings because of the relatively high leak rate of the cladding, which gives rise to unacceptable reactions with the coolant, resulting in a fuel rod failure. The use of the Cr or Cr alloy coated cladding 12 with a Mo, Ta, W, or Nb interlayer 20 provides a very hard cladding with a very high eutectic melting point that dramatically decreases the potential for fuel leakers while increasing the temperature capability of the fuel by more than 300 °C above the current Cr only coating. Referring to Fig. 3, a phase diagram illustrates the eutectic for the Zr, Nb combination. The phase diagram plots relative concentrations of Nb and Zr along the horizontal axis, and temperature along the vertical axis. The eutectic point is the point at which the liquid phase (L) borders directly on the solid phase (composed of both Nb and Zr), representing the minimum melting temperature of any possible alloy of Nb and Zr.

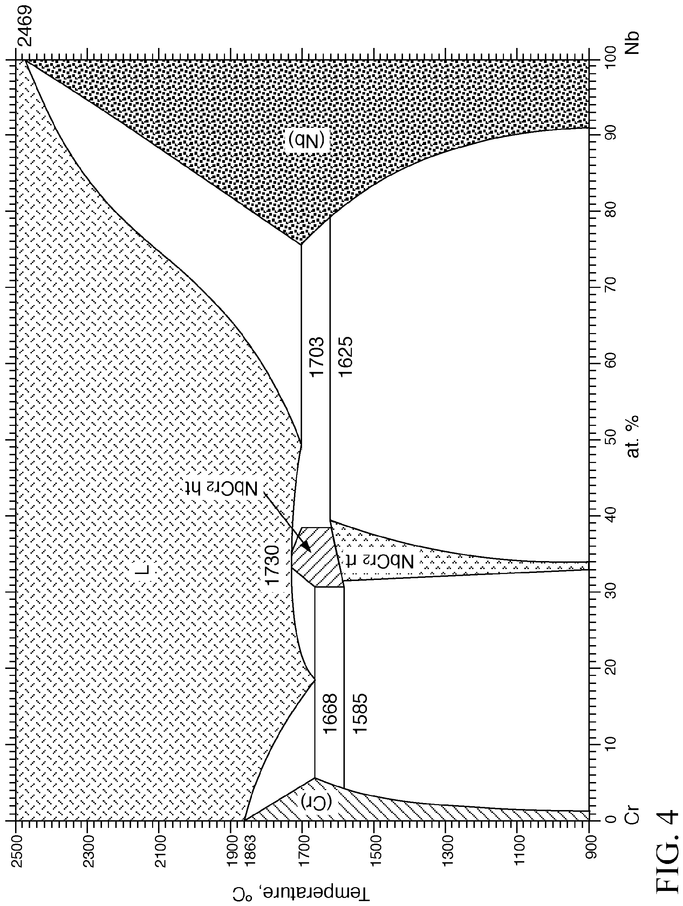

Fig. 4 illustrates the phase diagram showing the eutectic for the Nb, Cr combination. The phase diagram plots relative concentrations of Nb and Cr along the horizontal axis, and temperature along the vertical axis. The eutectic point is the point at which the liquid phase (L) borders directly on the solid phase (composed of both Nb and Cr), representing the minimum melting temperature of any possible alloy of Nb and Cr.

The use of a boron-containing integral fuel burnable absorber, such as UB₂ or ZrB₂, provides a means of controlling the high initial nuclear reactivity of the U₃Si₂ due to its high density by providing an economical means of adding boron to U₃Si₂, and in various aspects, adding enough boron to the U₃Si₂ powder before pelleting. Further, the U₃Si₂ does not react with UB₂ or ZrB₂, thus, in various alternative aspects, allowing particles of boron-containing integral fuel burnable absorber to be added to the U₃Si₂ powder before sintering.

The tubes, rods, slugs and pellets described herein may be machined or formed by any method known to those skilled in the art. Because of the close tolerances for size, configuration, and other properties identified herein and those known to be relevant in the nuclear industry, precision manufacturing methods should be used.

The fuel pellets 14 may be formed by known methods of manufacturing pellets in other commercial contexts. For example, the U₃Si₂ fuel in powder or particulate form, may be formed into a pellet by first homogenizing the particles to ensure relative uniformity in terms of particle size distribution and surface area. The integral fuel burnable absorber, UB₂ or ZrB₂ for example, also in powder or particulate form, and in certain aspects, other additives, such as lubricants and pore-forming agents, would be added. The integral fuel burnable absorber content in the U₃Si₂ pellet may be between 100 ppm and 10000 ppm, and in various aspects, may be about 1000 ppm.

The U₃Si₂ and boron-containing integral fuel burnable absorber particles may be formed into pellets by compressing the mixture of particles in suitable commercially available mechanical or hydraulic presses to achieve the desired "green" density and strength.

A basic press may incorporate a die platen with single action capability while the most complex styles have multiple moving platens to form "multi-level" parts. Presses are available in a wide range of tonnage capability. The tonnage required to press powder into the desired compact pellet shape is determined by multiplying the projected surface area of the part by a load factor determined by the compressibility characteristics of the powder.

To begin the process, the mixture of particles is filled into a die. The rate of die filling is based largely on the flowability of the particles.

Once the die is filled, a punch moves towards the particles. The punch applies pressure to the particles, compacting them to the geometry of the die. In certain pelleting processes, the particles may be fed into a die and pressed biaxially into cylindrical pellets using a load of several hundred MPa.

Following compression, the pellets 14 are sintered by heating in a furnace at temperatures varying with the material being sintered under a controlled atmosphere, usually comprised of argon. Sintering is a thermal process that consolidates the green pellets by converting the mechanical bonds of the particles formed during compression into stronger bonds and greatly strengthened pellets. The compressed and sintered pellets are then cooled and machined to the desired dimensions. Exemplary pellets may be about one centimeter, or slightly less, in diameter, and one centimeter, or slightly more, in length.

In certain aspects, the integral fuel burnable absorber is not intermixed with the fissile material in the pellet 14, but applied as a coating 22 to the outer surface of the pellet 14. The application of the UB₂ or ZrB₂ to the surface of the pellet 14 may be by any known method, such as a spray method or another method of coating.

The fuel pellets 14, either coated with or intermixed with, the integral fuel burnable absorber are stacked in a Zr or Zr alloy cladding 12. The cladding 12 will have been coated with a Cr coating 18, which may be applied using a thermal deposition process, such as a cold spray process. Where there are two layers, the intermediate Nb interlayer 20 will be deposited on the Zr cladding 12 first and may be ground and polished before deposition of the outer Cr layer 18, which can be ground and polished thereafter. The interlayer 20 may be deposited by using a physical vapor deposition method, such as cathodic arc physical vapor deposition, or a hot spray process, such as a plasma arc spray method.

Cathodic arc vapor deposition involves a source material and a substrate to be coated placed in an evacuated deposition chamber. The chamber contains only a relatively small amount of gas. The negative lead of a direct current (DC) power supply is attached to the source material (the "cathode") and the positive lead is attached to an anode. In many cases, the positive lead is attached to the deposition chamber, thereby making the chamber the anode. The electric arc is used to vaporize material from the cathode target. The vaporized material then condenses on the substrate, forming the desired layer.

A cold spray method may proceed by delivering a carrier gas to a heater where the carrier gas is heated to a temperature sufficient to maintain the gas at a desired temperature, for example, from 100 °C to 500 °C, after expansion of the gas as it passes through a nozzle. In various aspects, the carrier gas may be pre-heated to a temperature between 200 °C and 1200 °C, with a pressure, for example, of 5.0 MPa. In certain aspects, the carrier gas may be pre-heated to a temperature between 200 °C and 1000 °C, or in certain aspects, 300 °C and 900 °C and in other aspects, between 500 °C and 800 °C. The temperature will depend on the Joule -Thomson cooling coefficient of the particular gas used as the carrier. Whether or not a gas cools upon expansion or compression when subjected to pressure changes depends on the value of its Joule-Thomson coefficient. For positive Joule-Thomson coefficients, the carrier gas cools and must be preheated to prevent excessive cooling which can affect the performance of the cold spray process. Those skilled in the art can determine the degree of heating using well known calculations to prevent excessive cooling. See, for example, for N₂ as a carrier gas, if the inlet temperature is 130 °C, the Joule-Thomson coefficient is 0.1 °C/bar. For the gas to impact the tube at 130 °C if its initial pressure is 10 bar (~146.9 psia) and the final pressure is 1 bar (~14.69 psia), then the gas needs to be preheated to about 9 bar * 0.1 °C/bar or about 0.9 C to about 130.9 °C.

For example, the temperature for helium gas as the carrier is preferably 450 °C at a pressure of 3.0 to 4.0 MPa, and the temperature for nitrogen as the carrier may be 1100 °C at a pressure of 5.0 MPa, but may also be 600 °C - 800 °C at a pressure of 3.0 to 4.0 MPa. Those skilled in the art will recognize that the temperature and pressure variables may change depending on the type of the equipment used and that equipment can be modified to adjust the temperature, pressure and volume parameters.

Suitable carrier gases are those that are inert or are not reactive, and those that particularly will not react with the Cr particles or the Nb interlayer or Zr substrate to be coated. Exemplary carrier gases include nitrogen (N₂), hydrogen (H₂), argon (Ar), carbon dioxide (CO₂), and helium (He).

There is considerable flexibility in regard to the selected carrier gases. Mixtures of gases may be used. Selection is driven by both physics and economics. For example, lower molecular weight gases provide higher velocities, but the highest velocities should be avoided as they could lead to a rebound of particles and therefore diminish the number of deposited particles.

In an exemplary cold spray process, a high pressure gas enters through a conduit to a heater, where heating occurs quickly; substantially instantaneously. When heated to the desired temperature, the gas is directed to a gun-like instrument. Particles of the desired coating material, in this case, Cr, are held in a hopper, and are released and directed to the gun where they are forced through a nozzle towards the rod or tube substrate by a pressurized gas jet. The sprayed Cr particles are deposited onto rod or tube surface to form a coating comprised of the particles

Following the deposition of the coating 18, the method may further include annealing the coating. Annealing modifies mechanical properties and microstructure of the coated tube. Annealing involves heating the coating in the temperature range of 200 °C to 800 °C but preferably between 350 °C to 650 °C.

The coated substrate may also be ground, buffed, polished, or otherwise further processed following the coating or annealing steps by any of a variety of known means to achieve a smoother surface finish.

The present invention has been described in accordance with several examples, which are intended to be illustrative in all aspects rather than restrictive. Thus, the present invention is capable of many variations in detailed implementation, which may be derived from the description contained herein by a person of ordinary skill in the art.

The present invention has been described with reference to various exemplary and illustrative embodiments. The embodiments described herein are understood as providing illustrative features of varying detail of various embodiments of the disclosed invention.

Accordingly, it will be recognized by persons having ordinary skill in the art that various substitutions, modifications or combinations of any of the exemplary embodiments may be made. Thus, the invention is not limited by the description of the various embodiments, but rather by the claims.

## Claims

1. An accident tolerant fuel rod (10) for light and heavy water reactors comprising:
a nuclear fuel selected from the group consisting of U₃Si₂ and UN, in pellet (14) form;
a boron-containing integral fuel burnable absorber intermixed with the nuclear fuel in the pellet (14); and
a zirconium-containing cladding (12) material for housing the integral fuel burnable absorber intermixed with the nuclear fuel in the pellet (14), the cladding (12) material having a coating (18) applied thereto.

2. The fuel rod (10) recited in claim 1 further comprising an interlayer (20) disposed between the cladding (12) material and the coating (18).

3. The fuel rod (10) recited in claim 2 wherein the interlayer (20) has a thickness of 1 to 20 microns.

4. The fuel rod (10) recited in claim 2 wherein the interlayer (20) is made of molybdenum, tantalum, tungsten, and niobium.

5. The fuel rod (10) recited in claim 2 wherein the interlayer (20) is applied to the cladding (12)
material by a hot spray process.

6. The fuel rod (10) recited in claim 5 wherein the hot spray process is a plasma arc process.

7. The fuel rod recited in claim 1 wherein the coating is selected from the group consisting of chromium and a chromium alloy.

8. The fuel rod recited in claim 7 wherein the chromium alloy is selected from the group consisting of FeCrAl and FeCrAlY.

9. The fuel rod (10) recited in claim 1 wherein the coating (18) has a thickness of 5 to 50 microns.

10. The fuel rod (10) recited in claim 1 wherein the coating (18) is applied to the cladding (12) material by a cold spray process.

11. The fuel rod (10) recited in claim 1 wherein the integral fuel burnable absorber is selected from the group consisting of UB₂ and ZrB₂.

12. The fuel rod (10) recited in claim 1 wherein the integral fuel burnable absorber content in the pellet (14) is between 100 ppm and 10000 ppm.

13. The fuel rod (10) recited in claim 1 wherein the B10 isotope content of the integral burnable
absorber is between 1 % and 90%.

14. The fuel rod (10) recited in claim 1 wherein the nuclear fuel comprises U₃Si₂ having a density between 80% and 99% of theoretical density.

15. The fuel rod (10) recited in claim 1 wherein the nuclear fuel comprises UN, the nitrogen being selected from natural nitrogen and nitrogen enriched in the isotope of ¹⁵N, and the UN having a density between 80% and 99% of theoretical density.

16. The fuel rod (10) recited in claim 1 wherein the integral fuel burnable absorber is UB₂.

## Patentansprüche

1. Störfalltoleranter Brennstoffstab (10) für Leicht- und Schwerwasserreaktoren, umfassend:
einen Nuklearbrennstoff, ausgewählt aus der Gruppe, die U₃Si₂ und UN umfasst, in Form eines Pellets (14); einen borhaltigen Brennstoff mit integriertem abbrennbaren Absorber, vermischt mit dem Nuklearbrennstoff im Pellet (14); und
ein zirkonhaltiges Umhüllungsmaterial (12) zum Umhüllen des Brennstoffs mit integriertem abbrennbaren Absorber, vermischt mit dem Nuklearbrennstoff in dem Pellet (14), wobei das Umhüllungsmaterial (12) eine darauf aufgebrachte Beschichtung (18) aufweist.

2. Brennstab (10) nach Anspruch 1, ferner umfassend eine Zwischenschicht (20), angeordnet zwischen dem Umhüllungsmaterial (12) und der Beschichtung (18).

3. Brennstab (10) nach Anspruch 2, wobei die Zwischenschicht (20) eine Dicke von 1 bis 20 Mikrometern aufweist.

4. Brennstab (10) nach Anspruch 2, wobei die Zwischenschicht (20) aus Molybdän, Tantal, Wolfram und Niob hergestellt ist.

5. Brennstab (10) nach Anspruch 2, wobei die Zwischenschicht (20) durch einen Heißspritzprozess auf das Umhüllungsmaterial (12) aufgebracht ist.

6. Brennstab (10) nach Anspruch 5, wobei der Heißspritzprozess ein Plasmalichtbogenprozess ist.

7. Brennstab nach Anspruch 1, wobei die Beschichtung aus der Gruppe ausgewählt ist, die aus Chrom und einer Chromlegierung besteht.

8. Brennstab nach Anspruch 7, wobei die Chromlegierung aus der Gruppe ausgewählt ist, die aus FeCrAl und FeCrAlY besteht.

9. Brennstab (10) nach Anspruch 1, wobei die Beschichtung (18) eine Dicke von 5 bis 50 Mikrometern aufweist.

10. Brennstab (10) nach Anspruch 1, wobei die Beschichtung (18) durch einen Kaltspritzprozess auf das Umhüllungsmaterial (12) aufgebracht ist.

11. Brennstab (10) nach Anspruch 1, wobei der Brennstoff mit integriertem abbrennbaren Absorber aus der Gruppe ausgewählt ist, die aus UB₂ und ZrB₂ besteht.

12. Brennstab (10) nach Anspruch 1, wobei der Gehalt des Brennstoffs mit integriertem abbrennbaren Absorber im Pellet (14) zwischen 100 ppm und 10000 ppm liegt.

13. Brennstab (10) nach Anspruch 1, wobei der Gehalt an dem Isotop B10 des integrierten abbrennbaren Absorbers zwischen 1 % und 90 % liegt.

14. Brennstab (10) nach Anspruch 1, wobei der Nuklearbrennstoff U₃Si₂ mit einer Dichte zwischen 80 % und 99 % der theoretischen Dichte umfasst.

15. Brennstab (10) nach Anspruch 1, wobei der Nuklearbrennstoff UN umfasst, der Stickstoff aus natürlichem Stickstoff und in dem Isotop von ¹⁵N angereichertem Stickstoff ausgewählt ist und der UN eine Dichte zwischen 80 % und 99 % der theoretischen Dichte aufweist.

16. Brennstab (10) nach Anspruch 1, wobei der Brennstoff mit integriertem abbrennbaren Absorber UB₂ ist.

## Revendications

1. Crayon de combustible tolérant aux accidents (10) destiné aux réacteurs à eaux légères et lourdes, comprenant :
un combustible nucléaire sélectionné à partir du groupe consistant en U₃Si₂ et UN, sous forme de granulés (14) ;
un absorbeur intégral consommable de combustible contenant du bore, mélangé avec le combustible nucléaire dans le granulé (14) ; et
un matériau de revêtement (12) contenant du zirconium destiné au logement de l'absorbeur intégral consommable de combustible mélangé avec le combustible nucléaire dans le granulé (14), le matériau de revêtement (12) possédant une couche (18) appliquée dessus.

2. Crayon de combustible (10) énoncé dans la revendication 1, comprenant par ailleurs une intercouche (20) disposée entre le matériau de revêtement (12) et la couche (18).

3. Crayon de combustible (10) énoncé dans la revendication 1, dans lequel l'intercouche (20) possède une épaisseur de 1 à 20 microns.

4. Crayon de combustible (10) énoncé dans la revendication 2, dans lequel l'intercouche (20) est fabriquée en molybdène, en tantale, en tungstène et en niobium.

5. Crayon de combustible (10) énoncé dans la revendication 2, dans lequel l'intercouche (20) est appliquée sur le matériau de revêtement (12) par un processus de pulvérisation à chaud.

6. Crayon de combustible (10) énoncé dans la revendication 5, dans lequel le processus de pulvérisation à chaud est un processus à arc plasma.

7. Crayon de combustible énoncé dans la revendication 1, dans lequel la couche est sélectionnée parmi le groupe constitué du chrome et d'un alliage de chrome.

8. Crayon de combustible énoncé dans la revendication 7, dans lequel l'alliage de chrome est sélectionné parmi le groupe constitué de FeCrAl et de FeCrAlY.

9. Crayon de combustible (10) énoncé dans la revendication 1, dans lequel la couche (18) possède une épaisseur de 5 à 50 microns.

10. Crayon de combustible (10) énoncé dans la revendication 1, dans lequel la couche (18) est appliquée sur le matériau de revêtement (12) par un processus de pulvérisation à froid.

11. Crayon de combustible (10) énoncé dans la revendication 1, dans lequel l'absorbeur intégral consommable de combustible est sélectionné parmi le groupe constitué d'UB₂ et de ZrB₂.

12. Crayon de combustible (10) énoncé dans la revendication 1, dans lequel la teneur en absorbeur intégral consommable de combustible dans les granulés (14) se trouve entre 100 ppm et 10000 ppm.

13. Crayon de combustible (10) énoncé dans la revendication 1, dans lequel la teneur en isotope B10 de l'absorbeur intégral consommable se trouve entre 1 % et 90 %.

14. Crayon de combustible (10) énoncé dans la revendication 1, dans lequel le combustible nucléaire comprend de l'U₃Si₂ possédant une densité entre 80 % et 99 % de densité théorique.

15. Crayon de combustible (10) énoncé dans la revendication 1, dans lequel le combustible nucléaire comprend de l'UN, l'azote étant sélectionné parmi l'azote naturel et l'azote enrichi en isotope de ¹⁵N, et l'UN possédant une densité entre 80 % et 99 % de densité théorique.

16. Crayon de combustible (10) énoncé dans la revendication 1, dans lequel l'absorbeur intégral consommable de combustible est de l'UB₂.
